# EUROPEAN PATENT APPLICATION

(11) **EP 3 421 558 A1**
(43) Date of publication of application: **02.01.2019**
(21) Application number: 17179035.5
(22) Date of filing: 30.06.2017
(51) Int. Cl.: C09D 123/24, C09D 127/12

(54) **AMPHIPHILIC COPOLYMER-BASED PROTECTIVE COATING COMPOSITION FOR METAL SURFACES**

(71) Applicant: 3M Innovative Properties Company, Saint Paul, MN 55133-3427 (US)
(72) Inventor: Schuell, Christoph, 41453 Neuss (DE); Audenaert, Frans, B-2070 Zwijndrecht (BE); Lens, Hugo, B-2070 Zwijndrecht (BE)
(74) Representative: Gabriel, Kiroubagaranne

(57) **Abstract**

The present disclosure relates to a protective coating composition for a metal surface, wherein the composition comprises:
a) an amphiphilic copolymer comprising:
i. repeating monomeric units comprising a pendant group comprising a polyfluoropolyether group;
ii. first repeating monomeric units comprising a first pendant group comprising a first polar functional group selected from the group consisting of carboxylate groups, hydroxyl groups, and any combinations or salts thereof;
iii. optionally, second repeating monomeric units comprising a second pendant group comprising a second polar functional group selected from the group consisting of carboxylate groups, hydroxyl groups, and any combinations or salts thereof;
wherein the repeating monomeric units of the amphiphilic copolymer independently comprise an ethylenically unsaturated polymerizable group selected from the group of (meth)acrylate ester containing groups, and wherein the second repeating monomeric units are different from the first repeating monomeric units;
b) a solvent mixture comprising water and an organic solvent; and
c) optionally, a metal salt.

## Description

### Technical Field

The present disclosure relates to the field of protective and functional coatings which are useful for protecting metal surfaces. The present disclosure also relates to a method of treating a metal surface.

### Background

Metallic materials such as iron, steel, aluminum and zinc are widely used in the fields of transportation, aeronautics and astronautics, energy, electronics, architecture, upholstery, household electrical appliances, etc. In particular, stainless steel is ubiquitous in commercial kitchens, home kitchens, office buildings, airports, and various other public spaces. Most metals are susceptible to corrosion when exposed to humid air and corrosive liquids. Such corrosion may severely affect the quality of the metals and the products made of the metals. Accordingly, various methods for the passivation of metal surfaces to provide corrosion protection properties to such materials have been developed. Exemplary methods for providing corrosion protection to metallic surfaces are described e.g. in US 2005/0163933A1 (Dietsche et al.), US 2007/0240792A1 (Witteler et al.), in WO 2015026652 (Yin et al.) and in US 2012/0053104A1 (Olson et al.). The disclosed methods typically make use of coating compositions comprising a water-soluble polymer, such as e.g. a polyacrylate. Other surface treating agents using fluorinated compounds are described e.g. in EP-A1-1389634 (Satoh et al.) and in EP-A2-1300433 (Yamaguchi et al.).

In contrast, protective coating compositions for alternative metallic surfaces such as those comprising essentially chromium are not widely described in the art. Chromium-containing metallic surfaces may though be encountered in a large variety of articles including those present in home or commercial kitchens, in decorative household appliances, in restrooms, in bathrooms, in automotive vehicles, or in consumer electronics.

Stainless steel, and in particular chromium surfaces, are particularly sensitive to oily contaminants such as fingerprints, stains or marks originating from oily of fat components. Fingerprints or other oily contamination present on metal surfaces not only detrimentally affect their aesthetic appearance, but may also attract additional dirt such as lint or dust. The ability to remove or clean oily contamination from chromium-containing surfaces is particularly challenging mainly owing to their particular surface anchoring chemistry. Also, when used in decorative items, the maintaining of the optics and/or haptics of the protective surface treated surface is particularly challenging for chromium surfaces, in particular rough chromium surfaces as encountered in automotive interiors.

A partial solution is described in WO 2007077136 (Schottner), which discloses a protective coating composition comprising a triazine ring containing silane resin allegedly providing a unique combination of properties. Another partial solution is described in US 2008/0314287A1 (Clark et al.), which describes fluorochemical urethane compounds and coating compositions derived therefrom, which may be used in treating substrates, in particular hard surfaces such as ceramics or glass, to render them hydrophilic, oleophobic and easy to clean.

Without contesting the technical advantages associated with the protective coating compositions known in the art, there is still a need for a protective coating composition providing excellent easy-to-clean and contamination resistance properties to the treated metal surfaces.

Other advantages of the coating compositions and methods of the disclosure will be apparent from the following description.

### Summary

According to one aspect, the present disclosure relates to a protective coating composition for a metal surface, wherein the composition comprises:
a) an amphiphilic copolymer comprising:
   i. repeating monomeric units comprising a pendant group comprising a polyfluoropolyether group;
   ii. first repeating monomeric units comprising a first pendant group comprising a first polar functional group selected from the group consisting of carboxylate groups, hydroxyl groups, and any combinations or salts thereof;
   iii. optionally, second repeating monomeric units comprising a second pendant group comprising a second polar functional group selected from the group consisting of carboxylate groups, hydroxyl groups, and any combinations or salts thereof;
   wherein the repeating monomeric units of the amphiphilic copolymer independently comprise an ethylenically unsaturated polymerizable group selected from the group of (meth)acrylate ester containing groups, and wherein the second repeating monomeric units are different from the first repeating monomeric units;
b) a solvent mixture comprising water and an organic solvent; and
c) optionally, a metal salt.

In another aspect, the present disclosure is directed to a method of reducing contamination from a metal surface, which comprises the steps of:
a) providing a metal surface;
b) applying a protective coating composition as described above to the metal surface thereby forming a layer of the protective coating composition adjacent to the metal surface; and
c) drying and/or curing the layer of the protective coating composition thereby forming a protective coating layer adjacent to the metal surface.

According to still another aspect, the present disclosure is directed to a coated article comprising a substrate having a metal surface and a coating layer adjacent to at least part of the metal surface, wherein the coating layer comprises a layer of the protective coating composition as described above which has been dried and/or cured onto the metal surface.

In yet another aspect, the present disclosure relates to the use of a protective coating composition as described above for reducing contamination from a metal surface.

### Detailed description

According to one aspect, the present disclosure relates to a protective coating composition for a metal surface, wherein the composition comprises:
a) an amphiphilic copolymer comprising:
   i. repeating monomeric units comprising a pendant group comprising a polyfluoropolyether group;
   ii. first repeating monomeric units comprising a first pendant group comprising a first polar functional group selected from the group consisting of carboxylate groups, hydroxyl groups, and any combinations or salts thereof;
   iii. optionally, second repeating monomeric units comprising a second pendant group comprising a second polar functional group selected from the group consisting of carboxylate groups, hydroxyl groups, and any combinations or salts thereof;
   wherein the repeating monomeric units of the amphiphilic copolymer independently comprise an ethylenically unsaturated polymerizable group selected from the group of (meth)acrylate ester containing groups, and wherein the second repeating monomeric units are different from the first repeating monomeric units;
b) a solvent mixture comprising water and an organic solvent; and
c) optionally, a metal salt.

In the context of the present disclosure, it has been surprisingly found that a coating composition as described above provides excellent easy-to-clean and contamination resistance properties when used to treat a metal surface, in particular stainless steel and chromium surfaces.

Without wishing to be bound by theory, it is believed that these excellent easy-to-clean and contamination resistance properties are due in particular to the specific combination of the strong oleophobic properties provided by the fluorinated pendant groups, associated with the excellent surface anchoring properties provided by pendant groups comprising the polar functional groups, which are comprised in the amphiphilic copolymers used herein. The presence of the solvent mixture comprising water and an organic solvent is also believed to play a crucial role in achieving these beneficial properties.

The excellent oleophobic properties provided by the coating composition as described above are particularly beneficial for the removal of an oily contamination, in particular with simple wiping. As such, the protective coating compositions of the disclosure provide in particular outstanding fingerprint removal properties.

Still without being bound by theory, it is believed that due to the respective functional groups of the repeating monomer units being present as pendant groups (as opposed to being present in the backbone of the copolymer) in the amphiphilic copolymers for use herein, advantageous surface anchoring is provided with the treated metal surface, resulting in excellent adhesion to metal surfaces.

In some advantageous aspects, the protective coating compositions as described above are able to provide protective coatings provided with excellent durability, in particular wet mechanical abrasion resistance.

In some beneficial aspects, the protective coatings as described herein are nanometer-thin (nanoscale coating) and optically clear, which not only allows maintaining the optics and/or haptics of the to-be-treated metal surface, but also ensures that excellent performance is maintained with minimum amount of fluoro-based material being used. The specific combination of thin coating and excellent durability is unexpected as generally high durability goes hand-in-hand with thick protective coatings.

The protective coating compositions of the present disclosure are water-based compositions having therefore advantageous low flammability characteristics, and which beneficially do not require the use of fluorinated (co)solvents.

In the context of the present disclosure, the technical challenge of formulating and applying fluoro-based coatings from an aqueous solution has been overcome thanks to the use of the amphiphilic copolymers as described above, whereby the first and optionally, the second pendant groups acting as polar pendant groups provide suitable solubility of the fluoro-based copolymer into the aqueous composition. From an application process perspective, the protective coating compositions as described herein are easy to apply according to cost-effective coating processes. Advantageously still, the protective coating compositions of the present disclosure do not require high temperature or actinic radiations-based curing steps, as the curing step is typically performed at temperatures below 150°C, or even below 130°C.

The protective coating compositions of the present disclosure are particularly suited for imparting "easy-to-clean" or "easy removal" properties to a metal surface, in particular cleaning or removal with dry- or wet-wiping. Advantageously, the protective coating compositions as described herein allow reducing or removing oily contamination without the need for aggressive scrubbing typically performed with chemical cleaners or detergents, which usually detrimentally affect the visual and aesthetic appearance of the treated surface. As such, the protective coating compositions of the present disclosure meet the highly desirable combination of dry removal of contaminants (in particular oily contaminants) and water-based coating compositions.

Advantageously, the coating compositions of the present disclosure are able to provide excellent easy-to-clean properties, in particular with regard to oily contamination, on metal surfaces having various roughness characteristics, in particular on metal surfaces having a roughness Ra comprised between 0.2 µm and 1.5 µm, in particular between 0.5 µm and 0.9 µm, when determined by confocal laser microscopy according to ISO 25178-6. Advantageously still, the coating compositions of the present disclosure are able to maintain the optics and/or haptics of the treated metal surface on metal surfaces having various initial roughness characteristics.

The coating compositions of the present disclosure may find utility as protective coating for metallic surfaces (in particular chromium-containing and stainless steel surfaces) encountered in a large variety of articles including those present in home or commercial kitchens (e.g., refrigerator, dishwasher, stove, oven, microwave, exhaust hoods, fryers, grease traps, food-preparation tables, cabinets, toasters), in decorative household appliances and lighting, in restrooms (e.g., toilet roll dispensers, toilet stall partitions, urinal partitions), in bathrooms, in automotive vehicles (exterior or interior car or motorcycle parts, such as e.g. alloy wheels, body parts, decorative or functional metallic panels, tanks, handlebars, wheel guards, mirror caps), or in consumer electronics (metal cases for mobile phones, tablets, and computers).

In the context of the present disclosure, the term "pendant group" is meant to refer to an offshoot, which is neither oligomeric nor polymeric, from a polymeric chain. The expression "amphiphilic copolymer" is meant to express that the copolymer comprises both polar and apolar groups, in particular polar and apolar pendant groups. The term "oleophobic" is meant to designate the ability to repel or to not combine with oil or grease. The term "hydrophilic" is meant to designate the ability to have high affinity with water (e.g. the tendency to bind or attract water).

In the context of the present disclosure, the expression "chromium surface" is meant to designate a metallic surface having a chromium content of at least 50wt%, based on the weight of the metallic surface.

The term "alkyl" means a linear or branched, cyclic or acyclic, saturated monovalent hydrocarbon. The term "alkylene" means a linear saturated divalent hydrocarbon or a branched saturated divalent hydrocarbon. The term "alkoxy" means an alkyl having a terminal oxygen atom. The term "oxyalkoxy" has essentially the meaning given above for alkoxy except that one or more oxygen atoms may be present in the alkyl chain. The term "oxyalkyl" has essentially the meaning given above for alkyl except that one or more oxygen heteroatoms may be present in the alkyl chain, these heteroatoms being separated from each other by at least one carbon. The term "oxyalkylene" has essentially the meaning given above for alkylene except that one or more oxygen heteroatoms may be present in the alkylene chain, these heteroatoms being separated from each other by at least one carbon. The term "perfluoroalkyl" has essentially the meaning given above for "alkyl" except that all or essentially all of the hydrogen atoms of the alkyl are replaced by fluorine atoms. The term "perfluoroalkylene" has essentially the meaning given above for "alkylene" except that all or essentially all of the hydrogen atoms of the alkylene are replaced by fluorine atoms. The term "perfluorooxyalkyl" has essentially the meaning given above for "oxyalkyl" except that all or essentially all of the hydrogen atoms of the oxyalkyl are replaced by fluorine atoms. The term "perfluorooxyalkylene" has essentially the meaning given above for "oxyalkylene" except that all or essentially all of the hydrogen atoms of the oxyalkylene are replaced by fluorine atoms. The expression "perfluorinated group" means an organic group wherein all or essentially all of the carbon bonded hydrogen atoms are replaced with fluorine atoms.

The protective coating composition of the present disclosure comprises, as a first technical feature, an amphiphilic copolymer comprising:
i. repeating monomeric units comprising a pendant group comprising a polyfluoropolyether group;
ii. first repeating monomeric units comprising a first pendant group comprising a first polar functional group selected from the group consisting of carboxylate groups, hydroxyl groups, and any combinations or salts thereof;
iii. optionally, second repeating monomeric units comprising a second pendant group comprising a second polar functional group selected from the group consisting of carboxylate groups, hydroxyl groups, and any combinations or salts thereof;
wherein the repeating monomeric units of the amphiphilic copolymer independently comprise an ethylenically unsaturated polymerizable group selected from the group of (meth)acrylate ester containing groups, and wherein the second repeating monomeric units are different from the first repeating monomeric units

The amphiphilic copolymer for use in the present disclosure comprises, as a first technical feature, repeating monomeric units comprising a pendant group comprising a polyfluoropolyether group, and wherein the repeating monomeric units comprise an ethylenically unsaturated polymerizable group selected from the group of (meth)acrylate ester containing groups.

Perfluoropolyether groups for use herein are not particularly limited. Any perfluoropolyether groups commonly known in the art may be used in the context of the present disclosure. Suitable perfluoropolyether groups for use herein will be easily identified by those skilled in the art, in the light of the present description.

In the context of the present disclosure, it has been discovered that the presence of pendant groups comprising a polyfluoropolyether group in the amphiphilic copolymer for use herein advantageously impacts the oleophobic properties of the resulting protective coating composition.

In a particular aspect of the present disclosure, the polyfluoropolyether group for use herein comprises perfluorinated repeating units comprising at least one of -(CₙF₂ₙO)-, - (CF(Z)O)-, -(CF(Z)CₙF₂ₙO)-, or -(CₙF₂ₙCF(Z)O)-; and wherein Z is a perfluoroalkyl group or a perfluoroalkoxy group, each of which is optionally interrupted by at least one ether linkage, and n is an integer from 1 to 12.

In another particular aspect, the polyfluoropolyether group is -CF₂O(CF₂O)ₘ(C₂F₄O)_{b}CF₂-, -CF₂O(C₂F₄O)_{b}CF₂-, -(CF₂)₃O(C₄F₈O)_{b}(CF₂)₃-, or -CF(CF₃)-(OCF₂CF(CF₃))_{b}O-R_{f}-O(CF(CF₃)CF₂O)_{b}CF(CF₃)-, and wherein Rf is a perfluoroalkylene group optionally interrupted in chain by at least one ether or amine linkage, m is 1 to 50, and b is 3 to 40.

According to a preferred aspect of the present disclosure, the polyfluoropolyether group for use herein is C₃F₇O(CF(CF₃)CF₂O)ₐCF(CF₃)-, C₃F₇O(CF₂CF₂CF₂O)ₐCF₂CF₂-, or CF₃O(C₂F₄O)ₐCF₂-, and wherein a has an average value of 3 to 50.

The amphiphilic copolymer for use in the present disclosure comprises, as a second technical feature, first repeating monomeric units comprising a first pendant group comprising a first polar functional group selected from the group consisting of carboxylate groups, hydroxyl groups, and any combinations or salts thereof; and wherein the first repeating monomeric units comprise an ethylenically unsaturated polymerizable group selected from the group of (meth)acrylate ester containing groups.

In the context of the present disclosure, it has been found that the presence of these selected first polar functional groups as pendant groups in the amphiphilic copolymers for use herein, provides advantageous surface anchoring with the treated metal surface, which results in excellent adhesion to metal surfaces. Moreover, the presence of these selected first polar functional groups as pendant groups in the amphiphilic copolymers has been found to advantageously affect the solubility characteristics of the fluoro-based copolymer into the water-based composition.

In a particular aspect of the protective coating composition according to the present disclosure, the first polar functional group is selected from the group consisting of carboxylate groups, and any salts thereof.

The amphiphilic copolymer for use in the present disclosure comprises, as an optional technical feature, second repeating monomeric units comprising a second pendant group comprising a second polar functional group selected from the group consisting of carboxylate groups, hydroxyl groups, and any combinations or salts thereof; wherein the second repeating monomeric units comprise an ethylenically unsaturated polymerizable group selected from the group of (meth)acrylate ester containing groups, and wherein the second repeating monomeric units are different from the first repeating monomeric units.

In the context of the present disclosure, it has been found that the presence of these optional second polar functional groups as pendant groups in the amphiphilic copolymers for use herein, beneficially enhances not only the solubility characteristics of the fluoro-based copolymer into the water-based composition, but also the surface anchoring of the amphiphilic copolymer for use herein with the treated metal surface, which again leads to improved durable performance.

In a particular aspect of the protective coating composition according to the present disclosure, the second polar functional group is selected from the group consisting of hydroxyl groups.

In a preferred aspect of the amphiphilic copolymer for use herein, the first polar functional group is selected from the group consisting of carboxylate groups and any salts thereof, and the second polar functional group is selected from the group consisting of hydroxyl groups.

The amphiphilic copolymer for use herein is further characterized in that the repeating monomeric units of the amphiphilic copolymer independently comprise an ethylenically unsaturated polymerizable group selected from the group of (meth)acrylate ester containing groups. In a preferred aspect, the repeating monomeric units of the amphiphilic copolymer independently comprise an ethylenically unsaturated polymerizable group selected from the group of acrylate ester containing groups. In a typical aspect, the ethylenically unsaturated polymerizable groups of the repeating monomeric units are designed to form the backbone of the amphiphilic copolymer upon suitable polymerization reaction.

According to a typical aspect, the amphiphilic copolymer of the present disclosure is non-crosslinked. Advantageously, crosslinking of the amphiphilic copolymer is not required for it to provide the beneficial oleophobic properties to the treated surface. Accordingly, in an advantageous aspect, the amphiphilic copolymer for use in the present disclosure is free of any crosslinking monomeric units.

In a typical aspect, the protective coating composition according to the present disclosure comprises an amphiphilic copolymer in an amount of at least 0.01 wt%, at least 0.05 wt%, at least 0.1 wt%, at least 0.3 wt%, at least 0.5 wt%, at least 0.8, or even at least 1wt%, based on the weight of the overall coating composition.

In another typical aspect, the protective coating composition according to the present disclosure comprises an amphiphilic copolymer in an amount of at least 0.8 wt%, at least 1 wt%, at least 1.5 wt%, at least 2 wt%, at least 2.5 wt%, or even at least 3 wt%, based on the weight of the overall coating composition.

In still another aspect, the protective coating composition according to the present disclosure comprises an amphiphilic copolymer in an amount of less than 10 wt%, less than 8 wt%, less than 6 wt%, or even less than 5 wt%, based on the weight of the overall coating composition.

According to a preferred aspect, the coating composition according to the present disclosure comprises an amphiphilic copolymer in an amount comprised between 0.01 wt% and 10 wt%, between 0.05 wt% and 10 wt%, between 0.1 wt% and 8 wt%, between 0.2 wt% and 6 wt%, between 0.3 wt% and 5 wt%, between 0.5 wt% and 5 wt%, between 0.5 wt% and 4 wt%, or even between 1.0 wt% and 3.0 wt%, based on the weight of the overall coating composition.

The amphiphilic copolymer described herein may generally be prepared according to any conventional method, well known to those skilled in the art. As a way of example, the amphiphilic copolymers may be prepared by reacting a mixture containing the two (optionally, three) types of monomers typically in the presence of an initiator and optionally, a chain transfer agent (i.e., catalyst). By the term "reacting" it is meant forming a composition that includes at least one identifiable structural element due to each of the monomeric units. Depending on the stoichiometry of the reaction, an oligomer or polymer may be formed. Typically, the polymer or oligomer has a distribution of molecular weights and compositions.

Polymerization conditions can be readily determined by those skilled in the art in the light of the present description. For example, the polymerization can be carried out at a wide variety of temperatures suitable for conducting an organic free-radical reaction. Temperature and solvent for a particular use can be selected by those skilled in the art based on considerations such as the solubility of reagents, temperature required for the use of a particular initiator, and desired molecular weight. While it is not practical to enumerate a particular temperature suitable for all initiators and all solvents, generally suitable temperatures are in a range of 30°C to 200°C, 30°C to 150°C, 50°C to 120°C or even 50°C to 100°C.

Free-radical polymerizations may be carried out in the presence of chain transfer agents. Typical chain transfer agents that may be used in the preparation of compositions described herein include hydroxyl-substituted mercaptans (e.g., 2-mercaptoethanol, 3-mercapto-2-butanol, 3-mercapto-2-propanol, 3-mercapto-1-propanol, and 3-mercapto-1,2-propanediol (i.e., thioglycerol)); amino-substituted mercaptans (e.g., 2-mercaptoethylamine); difunctional mercaptans (e.g., di(2-mercaptoethyl)sulfide); and aliphatic mercaptans (e.g., octylmercaptan, dodecylmercaptan, and octadecylmercaptan). Others include methylmercaptopropionate and mercaptopropionic acid.

Free-radical polymerizations may be carried out in the presence of initiators (i.e., catalysts). Typical initiators that may be used in the preparation of compositions described herein include radical-generating initiators including azo and peroxide-based initiators. An example of azo-initiator includes azobisisobutyronitrile (AIBN) commercially available from Sigma-Aldrich.

In some particular aspects, the reaction may be carried out in one or more organic solvents. The components may be present in the reaction medium at any suitable concentration (e.g., from 5 percent to 80 percent by weight based on the total weight of the reaction mixture). Illustrative examples of suitable solvents include ethers (e.g., tetrahydrofuran, diethyl ether, glyme, diglyme, and diisopropyl ether), esters (e.g., ethyl acetate and butyl acetate), alcohols (e.g., ethanol and isopropyl alcohol), ketones (e.g., acetone, methyl ethyl ketone and methyl isobutyl ketone), halogenated solvents (e.g., methylchloroform, 1,1,2-trichloro-1,2,2-trifluoroethane, trichloroethylene, and trifluorotoluene), and mixtures thereof.

The protective coating composition of the present disclosure comprises, besides the amphiphilic copolymer as described above, a solvent mixture comprising water and an organic solvent. Solvent mixtures for use herein are not particularly limited. Any solvent mixture comprising water and an organic solvent commonly known in the art may be used in the context of the present disclosure. Suitable solvent mixtures for use herein will be easily identified by those skilled in the art, in the light of the present description.

In the context of the present disclosure, it has been surprisingly found that the presence of an organic solvent in the solvent mixture beneficially enhances the oleophobic characteristics of the resulting protective coating, which translates into enhanced easy-to-clean and contamination removal properties, in particular towards oily contamination such as e.g. fingerprints and oily stains.

Examples of suitable (water-miscible) organic solvents for use herein include, but are not limited to, primary or secondary mono- or polyalcohols having 1 to 6 carbon atoms, such as e.g. methanol, ethanol, propanol, isopropanol, n-butanol isobutanol, pentanol, hexanol or cyclohexanol. Other suitable (water-miscible) organic solvents include water-soluble ethers, such as tetrahydrofuran (THF), dipropyleneglycol monomethylether (DPM), propylene glycol n-butyl ether (PnB), or diethylene glycol dimethylether (Diglyme).

According to one exemplary aspect of the coating composition of the present disclosure, the organic solvent for use herein comprises an ether or an alcohol. Examples of suitable alcohols for use herein include, but are not limited to, methanol, ethanol, propanol and isopropanol.

Particular examples of suitable solvent mixtures for use herein include solvent combinations of water and alcohols such as e.g. water/methanol, water/ethanol, water/propanol or water/isopropanol.

According to one exemplary aspect of the coating composition of the present disclosure, the solvent mixture comprises water and water-soluble ethers, such as e.g. water/DPM, water/PnB and any mixtures thereof.

In an advantageous aspect of the protective coating composition, the solvent mixture for use herein comprises an organic solvent selected from the group of alcohols, in particular from the group consisting of ethanol, n-propanol, isopropanol, n-butanol, and any combinations or mixtures thereof.

In another advantageous aspect of the protective coating composition, the solvent mixture for use herein comprises an organic solvent selected from the group of water-miscible solvents, in particular from the group of water-soluble ethers, more in particular from the group consisting of dipropyleneglycol monomethylether (DPM), 2-butoxy ethanol, diethylene glycol dimethylether (Diglyme), propylene glycol n-butyl ether (PnB), and any combinations or mixtures thereof.

In still another advantageous aspect of the protective coating composition, the organic solvent for use herein is selected from the group consisting of ethanol, dipropyleneglycol monomethylether, and any combinations of mixtures thereof.

According to a preferred aspect of the protective coating composition, the solvent mixture is selected from water/ethanol, water/methanol, water/DPM, water/PnB and any combinations or mixtures thereof.

Advantageously, the water/organic solvent weight ratio of the solvent mixture is comprised between 70:30 and 98:2, between 80:20 and 95:5, or even between 85:15 and 95:5.

In a typical aspect, the protective coating composition according to the present disclosure comprises a solvent mixture in an amount greater than 50 wt%, greater than 60 wt%, greater than 70 wt%, greater than 80 wt%, greater than 85 wt%, greater than 90 wt%, or even greater than 95 wt%, based on the weight of the overall coating composition.

In another typical aspect, the protective coating composition according to the present disclosure comprises a solvent mixture in an amount comprised between 50 and 99 wt%, between 60 and 99 wt%, between 70 and 98 wt%, between 80 and 98 wt%, between 85 and 98 wt%, or even between 90 and 98 wt%, based on the weight of the overall coating composition.

The protective coating composition of the present disclosure may further comprise, as an optional ingredient, a metal salt. Metal salts for use herein are not particularly limited. Any metal salts commonly known in the art may be used in the context of the present disclosure. Suitable metal salts for use herein will be easily identified by those skilled in the art, in the light of the present description. Exemplary metal salts for use herein are described in US 2007/0240792A1 (Witteler et al.), the content of which is herewith fully incorporated by reference.

In the context of the present disclosure, it has been discovered that protective coating compositions comprising a metal salt, in particular a multivalent metal salt, lead to improved durability, in particular against wet mechanical abrasion, when compared to similar coating compositions not comprising a metal salt. Without wishing to be bound by theory, it is believed that the metal salts present in the coating composition promote crosslinking within the resulting protective coating and lead to the forming of a more densely packed protective coating onto the chromium surface.

Surprisingly still, it has been discovered that the incorporation of a metal salt in the protective coating composition, beneficially enhances the oleophobic characteristics of the resulting protective coating, which translates into enhanced contamination removal properties and contamination resistance properties, in particular towards oily contamination such as e.g. fingerprints and oily stains. Moreover, it has been found that the addition of metal salts allows further decreasing the amount of fluorinated compounds necessary to achieve the suitable level of hydrophobic and oleophobic properties.

According to a particular aspect of the protective coating composition of the present disclosure, the metal salt for use herein comprises a cation of a metal selected from the group consisting of magnesium, zinc, aluminum, calcium, copper, sodium, potassium, lithium, and any combinations thereof.

According to a particular aspect of the protective coating composition of the present disclosure, the metal salt comprises a cation of a metal, in particular a multivalent metal, selected from the group consisting of zinc, magnesium, calcium, and any combinations thereof. In a preferred aspect, the metal salt for use herein is a cation of zinc.

In a more preferred aspect, the metal salt for use herein is a cation of a metal selected from the group consisting of Mg(II), Zn(II), Al(III), Ca(II), Cu(II), Na(I), K(I), Li(I), and any combinations thereof.

According to another preferred aspect of the protective coating composition of the present disclosure, the metal salt is a nitrate salt, a chloride salt or a sulfate salt of a cation of a metal, in particular a multivalent metal. Preferably, the metal salt is a nitrate salt of a cation of a metal, in particular a multivalent metal. More preferably, the metal salt, in particular the multivalent metal, is selected from the group consisting of Zn(NO₃)₂, Mg(NO₃)₂, CaCl₂, and any combinations thereof.

According to a typical aspect, the protective coating composition according to the present disclosure may comprise a metal salt in an amount comprised between 0.01 wt% and 10 wt%, between 0.03 wt% and 8 wt%, between 0.05 wt% and 6 wt%, between 0.05 wt% and 5 wt%, between 0.1 wt% and 4 wt%, between 0.1 wt% and 3 wt%, between 0.1 wt% and 2 wt%, or even between 0.1 wt% and 1.5 wt%, based on the weight of the overall coating composition.

According to a preferred execution, the protective coating composition of the present disclosure comprises:
a) from 0.01 wt% to 10 wt%, from 0.03 wt% to 8 wt%, from 0.05 wt% to 6 wt%, from 0.05 wt% to 4 wt%, from 0.1 wt% to 3 wt%, from 0.5 wt% to 3 wt%, or even from 1 wt% to 3 wt% of the amphiphilic copolymer;
b) optionally, from 0.01 wt% to 10 wt%, from 0.05 wt% to 5 wt%, from 0.1 wt% to 2 wt%, or even from 0.1 wt% to 1.5 wt% of a metal salt; and
c) from 50 to 99.9 wt%, from 60 and 99 wt%, from 70 and 98 wt%, from 80 and 98 wt%, from 85 and 98 wt%, or even from 90 and 98 wt%, of the solvent mixture,
based on the weight of the overall coating composition.

In an advantageous aspect of the coating composition, the amphiphilic copolymer/ metal salt weight ratio is comprised between 9:1 and 1:2, between 9:1 and 1:1, between 8:2 and 1:1, between 7:3 and 1:1, or even between 6:4 and 1:1.

According to an exemplary aspect, the protective coating composition according to the present disclosure has a concentration (solid content) of active agents (amphiphilic copolymer, and optionally metal salt) of less than 20 wt%, less than 15 wt%, less than 10 wt%, less than 8 wt%, less than 6 wt%, or even less than 5 wt%, based on the weight of the overall coating composition.

In another typical aspect, the protective coating composition has a concentration of active agents comprised between 0.01 wt% and 15 wt%, between 0.05 wt% and 10 wt%, between 0.1 wt% and 8 wt%, between 0.5 wt% and 8 wt%, between 1 wt% and 6 wt%, between 2 wt% and 6 wt%, between 2 wt% and 5 wt%, or even between 3 wt% and 5 wt%, based on the weight of the overall coating composition.

The protective coating composition of the present disclosure may further comprise optional additives commonly known in the field. Suitable additives will be typically selected depending on the targeted application. Exemplary additives include, but are not limited to, surface-active compounds, corrosion inhibitors, preservatives, complexing agents, galvanization assistants, coating additives, coloring pigments, chelating agents, detergents, stabilizers, dispersants, enzymes, dyes or perfumes.

The protective coating composition according to the present disclosure may be obtained according to techniques commonly known in the art. In a typical aspect, the coating composition is obtained by simply mixing the various ingredients - including the amphiphilic copolymer, and optionally the metal salt - into the solvent mixture, followed by gentle mixing until dissolution.

The protective coating compositions of the present disclosure may be in the form of a solution, emulsion, suspension, dispersion or aerosol, depending on the targeted application. According to a typical aspect, the coating composition is in the form of an aqueous solution or dispersion of an amphiphilic copolymer as described above.

The protective coating compositions may be designed in any suitable form, depending again on the intended application. In an exemplary aspect, the protective coating composition may be in a sprayable form, or alternatively, in a wipable or dippable form.

The protective coating composition can be applied using any of a variety of liquid coating techniques (e.g., spraying, dipping, painting, etc.). It can be simply dried at room temperature to remove at least a portion of the water or organic solvent that may be included. If desired, the coating composition can be heated, after coating, to a temperature above room temperature (typically between 50°C and 150°C) for improved performance through e.g. curing.

Metal surfaces for use herein are not particularly limited. In the context of the present disclosure, any metallic surfaces present for example in articles or parts present in home or commercial kitchens, in decorative household appliances and lighting, in restrooms, in bathrooms, in automotive vehicles, or in consumer electronics, may be used. Suitable metal surfaces for use herein will be easily identified by those skilled in the art, in the light of the present description. Exemplary metal surfaces for use herein include, but are not limited to, stainless steel, chromium, aluminum, and any combinations or mixtures thereof.

In a preferred aspect, the metal surface for use herein is selected from the group consisting of stainless steel, chromium, and any combinations or mixtures thereof.

As already mentioned, the term "chromium surface" is meant to designate a metallic surface having a chromium content of at least 50wt%, based on the weight of the metallic surface. Suitable chromium surfaces for use herein will be easily identified by those skilled in the art, in the light of the present description.

Chromium surfaces for use herein may of course also be provided with a thin oxidic (such as Cr₂O₃ and CrO) or hydroxidic surface layer. Such layers, which are usually formed spontaneously on the chromium surfaces when exposed to the ambient conditions, are meant to be included in the term "chromium surface". Further, chromium oxides and chromium hydroxides which may be present in the chromium surface are also meant to be included in the term 'chromium content".

In a particular aspect of the disclosure, the chromium surface for use herein is a metallic surface having a chromium content of at least 50 wt%, at least 70 wt%, at least 80 wt%, at least 90 wt%, at least 95 wt%, or even at least 98 wt%, based on the weight of the metallic surface. In another particular aspect, the chromium surface for use herein consists essentially of chromium ("pure" chromium).

Chromium surfaces for use herein may advantageously refer to a metallic surface comprising a metallic alloy having a chromium content of at least 50wt%, based on the weight of the metallic alloy. According to one particular aspect of the present disclosure, the chromium surface for use herein comprises a chromium containing alloy. Chromium containing alloys are commonly known to those skilled in the art. The type and amounts of alloying constituents is determined in accordance with the desired end application. Exemplary constituents of chromium alloys include, in particular Zn, Al, Pb, Si, Mg, Sn, Cu, Cd, Fe, Co, Ni, Mn, Zr or Ti.

A chromium surface may also refer to the surface of a structure or a part composed entirely of chromium or a chromium-containing metallic alloy having a chromium content of at least 50wt%, based on the weight of the metallic alloy. Alternatively, a chromium surface may refer to the surface of a structure or a part coated or plated with pure chromium or with a chromium-containing metallic alloy having a chromium content of at least 50wt%, based on the weight of the metallic alloy ("chromated or chrome-plated surfaces"). Structures or parts coated or plated with chromium or a chromium-containing metallic alloy may be composed of other materials, such as e.g. other metals or metal alloys, polymers or composites. According to one preferred aspect of the present disclosure, the chromium surface for use herein is a chromated surface.

According to an exemplary aspect, the chromium surface for use herein may be present on a chrome-plated part, in particular a part chrome-plated by a galvanization process, in particular electrolytical galvanization or hot-dip galvanization process. In a particular aspect, the chromium surface is present on a part composed of a polymeric or composite material. According to another exemplary aspect, the polymeric or composite material is selected from the group consisting of polyolefins (polypropylene, polyethylene, high density polyethylene, blends of polypropylene), polyamide 6 (PA6), acrylonitrile butadiene styrene (ABS), PC/ABS blends, Polycarbonate (PC), Polyvinyl chloride (PVC), polyamide (PA), PUR, TPE, POM, polystyrene, poly(methyl) methacrylate, clear coats for vehicles, composite materials like fiber reinforced plastics, and any combinations or mixtures thereof. In a particular aspect, the chromium surface for use herein is present on a chrome-plated part comprises or is composed of acrylonitrile butadiene styrene (ABS).

Contamination as referred to herein is not particularly limited. In the context of the present disclosure, any contamination commonly encountered on metallic surfaces present for example in articles or parts present in home or commercial kitchens, in decorative household appliances and lighting, in restrooms, in bathrooms, in automotive vehicles, or in consumer electronics, may be used.

Suitable contamination for use herein will be easily identified by those skilled in the art, in the light of the present description. Exemplary contamination for use herein include, but are not limited to, stains or marks originating from organic or mineral sources.

In an advantageous aspect, the contamination is selected from oily contamination. Exemplary oily contamination for use herein include, but are not limited to, stains originating from oily or fat components.

In a particular aspect of the coating composition according to the disclosure, the oily contamination takes the form of a stain originating from oily or fat components selected from group consisting of moisturizing creams, body protection creams, sun creams, facial creams, therapeutic creams, human body fat, edible fat, edible oil, food oil, and any combinations or mixtures thereof. According to a preferred aspect, the oily contamination takes the form of a fingerprint.

In another aspect, the present disclosure is directed to a method of treating a metal surface comprising the steps of:
a) providing a protective coating composition as described above;
b) applying the protective coating composition to the metal surface thereby forming a layer of the coating composition adjacent to the metal surface; and
c) optionally, drying and/or curing the layer of the coating composition thereby forming a protective coating layer adjacent to the metal surface.

The step of applying the coating composition may be performed according to techniques commonly known in the art. Suitable application methods depend on the number, size and shape of the chromium surface part to be treated, and are not particularly limited. Exemplary applications techniques include, but are not limited to, spraying, rolling, wiping or dipping. In a particular aspect, the step of applying the coating composition is performed by wiping or dipping.

The step of applying the coating composition may comprise a plurality of individual process steps, including pretreatment steps, of the metal surface. For example, the metal surface may be cleaned with a suitable preparation before treatment or treated with a suitable physical surface treatment such as e.g. corona or plasma treatment. The metal surface may be appropriately washed after and between such pre-treatment steps.

After the step of applying the coating composition, the treated metal surface may be allowed to drip off to remove the excess of coating compositions. The excess coating composition and any resulting residues may alternatively be removed by means of a wipe, a squeegee or doctor blade. As an additional, but optional step, the layer of coating composition formed onto the metal surface after the application step may be subjected to a drying and/or curing step. The drying and/or curing may be performed according to techniques well known in the art. Suitable drying and/or curing may be performed at room temperature or at elevated temperature, typically at temperatures comprised between 20°C and 210°C, in particular between 50°C and 150°C. Conditions and temperatures for performing the drying and/or curing step may be appropriately chosen by the person skilled in the art. A typical drying and/or curing step may be performed e.g. in an appropriate oven.

In still another aspect, the present disclosure is directed to a method of reducing contamination from a metal surface, which comprises the steps of:
a) providing a metal surface;
b) applying a protective coating composition as described above to the metal surface thereby forming a layer of the protective coating composition adjacent to the metal surface; and
c) drying and/or curing the layer of the protective coating composition thereby forming a protective coating layer adjacent to the metal surface.

In yet another aspect of the present disclosure, it is provided a method of imparting contamination removal properties to a metal surface, which comprises the steps of:
a) providing a metal surface;
b) applying a protective coating composition as described above to the metal surface thereby forming a layer of the protective coating composition adjacent to the metal surface; and
c) drying and/or curing the layer of the protective coating composition thereby forming a protective coating layer adjacent to the metal surface.

All particular and preferred aspects relating to, in particular, the amphiphilic copolymer, the metal salt, the solvent mixture, the metal surface and the contamination as described above in the context of the coating composition, are fully applicable to the description of the methods of the present disclosure, as described above.

According to an advantageous aspect of the present disclosure, the methods are meant for imparting easy-to-clean properties and/or contamination resistance to the metal surface.

According to another advantageous aspect of the methods of the present disclosure, the metal surface is selected from the group consisting of stainless steel, chromium, and any combinations or mixtures thereof.

According to still another advantageous aspect of the methods of the present disclosure, the metal surface is a metallic surface having a chromium content of at least 50 wt%, at least 70 wt%, at least 80 wt%, at least 90 wt%, at least 95 wt%, or even at least 98 wt%, based on the weight of the metallic surface. In another particular aspect, the chromium surface consists essentially of chromium. In still another particular aspect, the chromium surface comprises a chromium containing alloy. In yet another aspect, the chromium surface is a chromated surface, in particular a chrome plated substrate, more in particular a chrome plated polymeric or composite substrate.

In a particular aspect of the methods of the present disclosure, the contamination takes the form of an oily contamination, in particular a fingerprint. In particular, the oily contamination takes the form of a stain originating from oily of fat components selected from group consisting of moisturizing creams, body protection creams, sun creams, facial creams, therapeutic creams, human body fat, edible fat, edible oil, food oil, and any combinations or mixtures thereof.

According to an advantageous aspect of the methods of the present disclosure, the drying/curing step, in particular the curing step, is performed at temperatures comprised between 20°C and 35°C, or even between 20°C and 30°C.

In another typical aspect, the drying/curing step, in particular the curing step, is performed at temperatures typically comprised between 60°C and 200°C, between 60°C and 160°C, between 80°C and 150°C or even between 90°C and 150°C.

According to an advantageous execution, the methods of the present disclosure are free of any step of pre-treating the metal surface, in particular pre-treatment steps aimed at achieving chemical or physical activation of the metal surface, before applying the protective coating composition.

According to still another aspect, the present disclosure is directed to a coated article comprising a substrate having a metal surface and a coating layer adjacent to at least part of the metal surface, wherein the coating layer comprises a layer of the protective coating composition as described above which has been dried and/or cured onto the metal surface.

According to an advantageous aspect of the coated article of the present disclosure, the substrate metal surface is typically selected from the group consisting of stainless steel, chromium, and any combinations or mixtures thereof.

According to another advantageous aspect, the coated article of the present disclosure has a static water contact angle of more than 50°, more than 55°, more than 60°, more than 65°, more than 70°, more than 75°, more than 80°, or even more than 85°, when measured according to the static water contact angle measurement method described in the experimental section.

According to still another advantageous aspect, the coated article of the present disclosure has a static water contact angle of more than 50°, more than 55°, more than 60°, more than 65°, more than 70°, more than 75°, or even more than 80°, after 50 wet mechanical abrasion cycles when measured according to the wet abrasion test method described in the experimental section.

According to still another advantageous aspect, the coated article of the present disclosure has a static hexadecane contact angle of more than 10°, more than 15°, more than 20°, more than 25°, more than 30°, more than 35°, more than 40°, more than 45°, more than 50°, more than 55°, more than 60°, or even more than 65°, when measured according to the static hexadecane contact angle measurement method described in the experimental section.

According to yet another advantageous aspect, the coated article of the present disclosure has a static hexadecane contact angle of more than 10°, more than 15°, more than 20°, more than 25°, more than 30°, more than 35°, more than 40°, more than 45°, more than 50°, more than 55°, or even more than 60°, after 50 wet mechanical abrasion cycles when measured according to the wet abrasion test method described in the experimental section.

All particular and preferred aspects relating to in particular, the amphiphilic copolymer, the metal salt, the solvent mixture, the metal surface and the contamination as described above in the context of the coating composition and the methods, are fully applicable to the description of the coated article, as described above.

According to still another aspect, the present disclosure relates to the use of a protective coating composition as described above for protecting a metal surface which is typically selected from the group consisting of stainless steel, chromium, and any combinations or mixtures thereof.

In yet another aspect, the present disclosure relates to the use of a protective coating composition as described above for reducing contamination from a metal surface.

According to still another aspect, the present disclosure relates to the use of a protective coating composition as described above for imparting any of easy-to-clean properties, contamination removal properties or contamination resistance properties to a metal surface.

All particular and preferred aspects relating to the protective coating composition, the methods and the coated article as described above, are fully applicable to the description of the uses of the present disclosure, as described above.
Item 1 is a protective coating composition for a metal surface, wherein the composition comprises:
   a) an amphiphilic copolymer comprising:
      i. repeating monomeric units comprising a pendant group comprising a polyfluoropolyether group;
      ii. first repeating monomeric units comprising a first pendant group comprising a first polar functional group selected from the group consisting of carboxylate groups, hydroxyl groups, and any combinations or salts thereof;
      iii. optionally, second repeating monomeric units comprising a second pendant group comprising a second polar functional group selected from the group consisting of carboxylate groups, hydroxyl groups, and any combinations or salts thereof;
      wherein the repeating monomeric units of the amphiphilic copolymer independently comprise an ethylenically unsaturated polymerizable group selected from the group of (meth)acrylate ester containing groups, and wherein the second repeating monomeric units are different from the first repeating monomeric units;
   b) a solvent mixture comprising water and an organic solvent; and
   c) optionally, a metal salt.
Item 2 is a coating composition according to item 1, wherein the polyfluoropolyether group comprises perfluorinated repeating units comprising at least one of -(CₙF₂ₙO)-, -(CF(Z)O)-, -(CF(Z)CₙF₂ₙO)-, or -(CₙF₂ₙCF(Z)O)-; and wherein Z is a perfluoroalkyl group or a perfluoroalkoxy group, each of which is optionally interrupted by at least one ether linkage, and n is an integer from 1 to 12.
Item 3 is a coating composition according to item 1 or 2, wherein the polyfluoropolyether group is -CF₂O(CF₂O)ₘ(C₂F₄O)_{b}CF₂-, -CF₂O(C₂F₄O)_{b}CF₂-, -(CF₂)₃O(C₄F₈O)_{b}(CF₂)₃-, or -CF(CF₃)-(OCF₂CF(CF₃))_{b}O-Rf'-O(CF(CF₃)CF₂O)bCF(CF₃)-, and wherein Rf is a perfluoroalkylene group optionally interrupted in the chain by at least one ether or amine linkage, m is 1 to 50, and b is 3 to 40.
Item 4 is a coating composition according to any of the preceding items, wherein the polyfluoropolyether group is C₃F₇O(CF(CF₃)CF₂O)ₐCF(CF₃)-, C₃F₇O(CF₂CF₂CF₂O)ₐCF₂CF₂-, or CF₃O(C₂F₄O)ₐCF₂-, and wherein a has an average value of 3 to 50.
Item 5 is a coating composition according to any of the preceding items, wherein the first polar functional group is selected from the group consisting of carboxylate groups, and any salts thereof.
Item 6 is a coating composition according to any of the preceding items, wherein the second polar functional group is selected from the group consisting of hydroxyl groups.
Item 7 is a coating composition according to any of the preceding items, wherein the first polar functional group is selected from the group consisting of carboxylate groups and any salts thereof, and wherein the second polar functional group is preferably selected from the group consisting of hydroxyl groups.
Item 8 is a coating composition according to any of the preceding items, wherein the solvent mixture comprises an organic solvent selected from the group of alcohols, in particular from the group consisting of ethanol, n-propanol, isopropanol, n-butanol, and any combinations or mixtures thereof.
Item 9 is a coating composition according to items 1 to 8, wherein the solvent mixture comprises an organic solvent selected from the group of water-miscible solvents, in particular from the group of water-soluble ethers, more in particular from the group consisting of dipropyleneglycol monomethylether (DPM), 2-butoxy ethanol, diethylene glycol dimethylether (Diglyme), propylene glycol n-butyl ether (PnB), and any combinations or mixtures thereof.
Item 10 is a coating composition according to any of the preceding items, wherein the organic solvent selected from the group consisting of ethanol, dipropyleneglycol monomethylether, and any combinations of mixtures thereof.
Item 11 is a coating composition according to any of the preceding items, wherein the solvent mixture is selected from water/ethanol, water/methanol, water/DPM, water/PnB and any combinations or mixtures thereof.
Item 12 is a coating composition according to any of the preceding items, wherein the metal salt comprises a cation of a metal selected from the group consisting of magnesium, zinc, aluminum, calcium, copper, sodium, potassium, lithium, and any combinations thereof.
Item 13 is a coating composition according to any of the preceding items, wherein the metal salt comprises a cation of a metal, in particular a multivalent metal, selected from the group consisting of zinc, magnesium, calcium, and any combinations thereof.
Item 14 is a coating composition according to any of the preceding items, wherein the metal salt comprises a cation of zinc.
Item 15 is a coating composition according to any of the preceding items, wherein the metal salt comprises a cation of a metal selected from the group consisting of Mg(II), Zn(II), Al(III), Ca(II), Cu(II), Na(I), K(I), Li(I), and any combinations thereof.
Item 16 is a coating composition according to any of the preceding items, wherein the metal salt is a nitrate salt, a chloride salt or a sulfate salt of a cation of a metal, in particular a multivalent metal.
Item 17 is a coating composition according to any of the preceding items, wherein the metal salt is a nitrate salt of a cation of a metal, in particular a multivalent metal.
Item 18 is a coating composition according to any of the preceding items, wherein the metal salt, in particular the multivalent metal, is selected from the group consisting of Zn(NO₃)₂, Mg(NO₃)₂, CaCl₂, and any combinations thereof.
Item 19 is a coating composition according to any of the preceding items, which comprises a solvent mixture in an amount greater than 50 wt%, greater than 60 wt%, greater than 70 wt%, greater than 80 wt%, greater than 85 wt%, greater than 90 wt%, or even greater than 95 wt%, based on the weight of the overall coating composition.
Item 20 is a coating composition according to any of the preceding items, which comprises a solvent mixture in an amount comprised between 50 and 99 wt%, between 60 and 99 wt%, between 70 and 98 wt%, between 80 and 98 wt%, between 85 and 98 wt%, or even between 90 and 98 wt%, based on the weight of the overall coating composition.
Item 21 is a coating composition according to any of the preceding items, wherein the water/organic solvent weight ratio of the solvent mixture is comprised between 70:30 and 98:2, between 80:20 and 95:5, or even between 85:15 and 95:5.
Item 22 is a coating composition according to any of the preceding items, which comprises an amphiphilic copolymer in an amount of at least 0.01 wt%, at least 0.05 wt%, at least 0.1 wt%, at least 0.3 wt%, at least 0.5 wt%, at least 0.8, or even at least 1wt%, based on the weight of the overall coating composition.
Item 23 is a coating composition according to any of the preceding items, which comprises an amphiphilic copolymer in an amount of at least 0.8 wt%, at least 1 wt%, at least 1.5 wt%, at least 2 wt%, at least 2.5 wt%, or even at least 3 wt%, based on the weight of the overall coating composition.
Item 24 is a coating composition according to any of the preceding items, which comprises an amphiphilic copolymer in an amount of less than 10 wt%, less than 8 wt%, less than 6 wt%, or even less than 5 wt%, based on the weight of the overall coating composition.
Item 25 is a coating composition according to any of the preceding items, which comprises an amphiphilic copolymer in an amount comprised between 0.01 wt% and 10 wt%, between 0.05 wt% and 10 wt%, between 0.1 wt% and 8 wt%, between 0.2 wt% and 6 wt%, between 0.3 wt% and 5 wt%, between 0.5 wt% and 5 wt%, between 0.5 wt% and 4 wt%, or even between 1.0 wt% and 3.0 wt%, based on the weight of the overall coating composition.
Item 26 is a coating composition according to any of the preceding items, which comprises a metal salt in an amount comprised between 0.01 wt% and 10 wt%, between 0.03 wt% and 8 wt%, between 0.05 wt% and 6 wt%, between 0.05 wt% and 5 wt%, between 0.1 wt% and 4 wt%, between 0.1 wt% and 3 wt%, between 0.1 wt% and 2 wt%, or even between 0.1 wt% and 1.5 wt%, based on the weight of the overall coating composition.
Item 27 is a coating composition according to any of the preceding items, which comprises:
   a) from 0.01 wt% to 10 wt%, from 0.03 wt% to 8 wt%, from 0.05 wt% to 6 wt%, from 0.05 wt% to 4 wt%, from 0.1 wt% to 3 wt%, from 0.5 wt% to 3 wt%, or even from 1 wt% to 3 wt% of an amphiphilic copolymer;
   b) optionally, from 0.01 wt% to 10 wt%, from 0.05 wt% to 5 wt%, from 0.1 wt% to 2 wt%, or even from 0.1 wt% to 1.5 wt% of a metal salt; and
   c) from 50 to 99.9 wt%, from 60 and 99 wt%, from 70 and 98 wt%, from 80 and 98 wt%, from 85 and 98 wt%, or even from 90 and 98 wt%, of the solvent mixture,
   based on the weight of the overall coating composition.
Item 28 is a coating composition according to any of the preceding items, wherein the amphiphilic copolymer/metal salt weight ratio is comprised between 9:1 and 1:2, between 9:1 and 1:1, between 8:2 and 1:1, between 7:3 and 1:1, or even between 6:4 and 1:1.
Item 29 is a coating composition according to any of the preceding items, which has a concentration (solid content) of active agents (amphiphilic copolymer, and optionally metal salt) of less than 20 wt%, less than 15 wt%, less than 10 wt%, less than 8 wt%, less than 6 wt%, or even less than 5 wt%, based on the weight of the overall coating composition.
Item 30 is a coating composition according to item 29, which has a concentration of active agents comprised between 0.01 wt% and 15 wt%, between 0.05 wt% and 10 wt%, between 0.1 wt% and 8 wt%, between 0.5 wt% and 8 wt%, between 1 wt% and 6 wt%, between 2 wt% and 6 wt%, between 2 wt% and 5 wt%, or even between 3 wt% and 5 wt%, based on the weight of the overall coating composition.
Item 31 is a method of treating a metal surface comprising the steps of:
   a) providing a protective coating composition according to any of items 1 to 30;
   b) applying the protective coating composition to the metal surface thereby forming a layer of the coating composition adjacent to the metal surface; and;
   c) optionally, drying and/or curing the layer of the coating composition thereby forming a protective coating layer adjacent to the metal surface.
Item 32 is a method of reducing contamination from a metal surface, which comprises the steps of:
   a) providing a metal surface;
   b) applying a protective coating composition according to any of items 1 to 30 to the metal surface thereby forming a layer of the protective coating composition adjacent to the metal surface; and
   c) drying and/or curing the layer of the protective coating composition thereby forming a protective coating layer adjacent to the metal surface.
Item 33 is a method of imparting contamination removal properties to a metal surface, which comprises the steps of:
   a) providing a metal surface;
   b) applying a protective coating composition according to any of items 1 to 30 to the metal surface thereby forming a layer of the protective coating composition adjacent to the metal surface; and
   c) drying and/or curing the layer of the protective coating composition thereby forming a protective coating layer adjacent to the metal surface.
Item 34 is a method according to any of items 31 to 33, for imparting easy-to-clean properties and/or contamination resistance to the metal surface.
Item 35 is a method according to item 34, wherein the metal surface is selected from the group consisting of stainless steel, chromium, and any combinations or mixtures thereof.
Item 36 is a method according to item 35, wherein the chromium surface is a metallic surface having a chromium content of at least 50 wt%, at least 70 wt%, at least 80 wt%, at least 90 wt%, at least 95 wt%, or even at least 98 wt%, based on the weight of the metallic surface.
Item 37 is a method according to any of item 35 or 36, wherein the chromium surface consists essentially of chromium.
Item 38 is a method according to any of item 35 or 36, wherein the chromium surface comprises a chromium containing alloy.
Item 39 is a method according to any of item 35 or 36, wherein the chromium surface is a chromated surface.
Item 40 is a method according to any of items 32 to 39, wherein the contamination takes the form of an oily contamination, in particular a fingerprint.
Item 41 is a method according to item 40, wherein the oily contamination takes the form of a stain originating from oily or fat components selected from group consisting of moisturizing creams, body protection creams, sun creams, facial creams, therapeutic creams, human body fat, edible fat, edible oil, food oil, and any combinations or mixtures thereof.
Item 42 is a method according to any of items 31 to 41, wherein the drying/curing step, in particular the curing step, is performed at temperatures comprised between 20°C and 35°C, or even between 20°C and 30°C.
Item 43 is a method according to any of items 31 to 41, wherein the drying/curing step, in particular the curing step, is performed at temperatures typically comprised between 60°C and 200°C, between 60°C and 160°C, between 80°C and 150°C or even between 90°C and 150°C.
Item 44 is a method according to any of items 31 to 43, which is free of any step of pre-treating the metal surface, in particular pre-treatment steps aimed at achieving chemical or physical activation of the metal surface, before applying the protective coating composition.
Item 45 is a coated article comprising a substrate having a metal surface and a coating layer adjacent to at least part of the metal surface, wherein the coating layer comprises a layer of the protective coating composition according to any of items 1 to 30 which has been dried and/or cured onto the metal surface.
Item 46 is a coated article according to item 45, which has a static water contact angle of more than 50°, more than 55°, more than 60°, more than 65°, more than 70°, more than 75°, more than 80°, or even more than 85°, when measured according to the static water contact angle measurement method described in the experimental section.
Item 47 is a coated article according to any of item 45 or 46, which has a static water contact of more than 50°, more than 55°, more than 60°, more than 65°, more than 70°, more than 75°, or even more than 80°, after 50 wet mechanical abrasion cycles when measured according to the wet abrasion test method described in the experimental section.
Item 48 is a coated article according to any of items 45 to 47, which has a static hexadecane contact angle of more than 10°, more than 15°, more than 20°, more than 25°, more than 30°, more than 35°, more than 40°, more than 45°, more than 50°, more than 55°, more than 60°, or even more than 65°, when measured according to the static hexadecane contact angle measurement method described in the experimental section.
Item 49 is a coated article according to any of items 45 to 48 which has a static hexadecane contact angle of more than 10°, more than 15°, more than 20°, more than 25°, more than 30°, more than 35°, more than 40°, more than 45°, more than 50°, more than 55°, or even more than 60°, after 50 wet mechanical abrasion cycles when measured according to the wet abrasion test method described in the experimental section.
Item 50 is the use of a protective coating composition according to any of items 1 to 30 for protecting a metal surface which is typically selected from the group consisting of stainless steel, chromium, and any combinations or mixtures thereof.
Item 51 is the use according to item 50, for reducing contamination from a metal surface.
Item 52 is the use according to any of item 50 or 51 for imparting any of easy-to-clean properties, contamination removal properties or contamination resistance properties to a metal surface.

### EXAMPLES

The present disclosure is further illustrated by the following examples. These examples are merely for illustrative purposes only and are not meant to be limiting on the scope of the appended claims.

### Test methods and procedures:

### Contact Angle Measurement

Static contact angle measurements are performed using Millipore water (WCA) or hexadecane (HCA, analytical grade) with a Krüss DSA100 contact angle analyzer. Contact angle is measured on sessile drop (3 µL) and is measured 30 sec after deposition. The values reported are the average of at least 3 (HCA) or 4 (WCA) separate measurements.

### Mechanical wet abrasion testing (Durability testing)

Abrasion tests are performed on a 5900 Reciprocating Abraser (available from Taber Industries) by employing a 9N force and a velocity of 60 cycles/minutes (500 g weight). The cloth used for the abrasion cycles is a 13.5 crockmeter cloth (crockmeter squares, 100% cotton) wetted with deionized water.

### Stain resistance (SR) evaluation test method:

The stained test material is prepared by drawing a line being 30 mm long and having a 3 mm width onto the coated stainless steel test substrates, using a permanent marker (commercially available under tradename Edding 1000). The marked test material is then dried for 45-60 minutes at room temperature, before carrying out the stain removal procedure. The stain removal is tested by rubbing for 20 seconds with a dry cotton cloth. After dry rubbing, the residual stains are visually rated according to the 8 point 3M Stain Release scale, wherein: 1 = completely stained, 8 = no stain left.

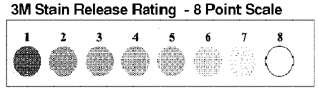

### Stain repellency (ST) evaluation test method:

The stain repellency performance is assessed by visual observation of the bead-up of the stain material (permanent marker) onto the stained coated test panel. The bead-up of the stains is evaluated on a scale ranging from 1 to 5, wherein: 5 = no bead-up, 1 = strong bead-up.

### Fingerprint (oily contamination) removal (FP) test method

The fingerprint removal test method is performed according to a slightly modified version of test method BMW PR 506, as described below:
1.4 ml of an artificial finger fat (AFF) obtained by combining: 50g of artificial alkaline sweat (according to DIN EN ISO 105-E04), 2g of paraffin oil (commercially available from Sigma-Aldrich), 1.5g Lecithin (Fluidlecithin Super, commercially available from Brennessel, Munich, Germany) and 0.3g of PNC 400 thickener (polymer commercially available from Brennessel, Munich, Germany), is applied onto a 4 cm x 4 cm "Glorex Bastelfilz weiß" felt piece (100% acrylic art. 6.1212.611, obtained from OBI, Germany) and spread with a wooden spatula. After 2 to 4 minutes a silicone rubber stamp - with a thumb profile - is pressed onto the felt piece with a force of 30 N for 5 seconds. Then, the silicone stamp is pressed onto the test chromium surface using a force of 30 N for 5 seconds. The samples are allowed to dry at room temperature for 24 hours before evaluation.

The removal of the fingerprint is performed by wiping the fingerprint-contaminated surface one time with a dry Kimwipe (dimension 0.3 cm x 0.5 cm, available from Kimberly-Clark) using a force of 10N, followed by wiping 40 times with a fresh dry Kimwipe using the same force. The fingerprint removal performance is determined on the as-deposited coating composition (no abrasion) by visual observation of the residual fingerprint after carrying the fingerprint removal process. The residual fingerprint is evaluated by using the following scale ranging from 1 to 5, wherein: 1 = no fingerprint removal, 2 = clear fingerprint residues, 3 = light fingerprint residues, 4 = minor fingerprint residues, 5 = complete fingerprint removal, no visible residue.

### Test panels/substrates used for testing:

Stainless steel test substrates (Type 1.403 IIID) are available from Rocholl GmbH, Germany). The test panels have a dimension of 125 mm x 75 mm x 2 mm.

### Materials employed:

In the examples, the following raw materials are used:
**(HFPO)-MA** is a perfluoropolyether methacrylate monomer obtained from 3M Belgium (Zwijndrecht, Belgium), having the following formula: CF₃CF₂CF₂O(CF(CF₃)CF₂O)ₙCF(CF₃)CONHCH₂CH₂OC(O)-C(Me)=CH₂, with n=5.35.
**Methacrylic acid (MAA)** is commercially available from Sigma-Aldrich.
**2-hydroxyethyl methacrylate (2HEMA)** is commercially available from Sigma-Aldrich.
***2-mercapto-ethnaol (2ME)*** is commercially available from Sigma-Aldrich.
**Dimethylamino-ethanol (DMAE)** is commercially available from Sigma-Aldrich.
**Azo-initiator V-59** is commercially available from Wako Industries.
**Isopropanol (IPA)** is commercially available from Sigma-Aldrich.
***Dipropyleneglycol monomethyl ether (DPM),*** is a glycol ether, commercially available from Sigma-Aldrich.
**Magnesium nitrate hexahydrate (Mg(NO₃)₂ x 6H₂0),** is a multivalent metal salt, commercially available from Sigma-Aldrich.
**Zinc nitrate hexahydrate (Zn(NO₃)₂ x 6H₂0)**, is a multivalent metal salt, commercially available from Sigma-Aldrich.

### Synthesis of the amphiphilic copolymer (ACP 1):

A 500 ml polymerization bottle is charged respectively with 72.0 g (HFPO)-MA, 12.0 g MAA, 32.4 g 2HEMA, 3.6 g 2ME, 280 g IPA and 0.60 g V-59 azo-initiator. The bottle is degassed with waterjet vacuum, followed by breaking the vacuum with nitrogen atmosphere. This procedure is repeated 3 times. The polymerization bottle is run for 16 hours in a preheated Launder-O-meter at 66°C. After cooling, 0.60 g V-59 is added, the bottle is again degassed and covered with nitrogen atmosphere. The polymerization bottle is then run for another 8 hours at 66°C yielding a semi-viscous solution containing 30% fluorinated polymer solids. Complete monomer conversion is confirmed via NMR. To prepare an aqueous polymer solution, the reaction product is transferred to a 1 liter round bottom flask and 12.6 g DMAE and 412 g deionized water are added. The IPA is stripped off at 70°C using a Büchi rotary evaporator and waterjet vacuum. A clear brownish aqueous solution is obtained, containing 28% solids.

### Preparation of the coating compositions:

Unless otherwise stated, the coating compositions are simply prepared by adding the appropriate amount of the various components according to the following sequence. First, the solvent mixture of water and solvent (EtOH or DPM) is placed in a vial, followed by the addition of the amphiphilic copolymer ACP 1 (28wt% in water), and optionally, the metal salt. The mixture is gently mixed to dissolve and immediately ready to be used. Typical formulations are prepared at a 10g scale for coating by wiping and 110g scale for dip-coating.

### Coating and curing procedure:

### Substrate cleaning:

Prior to testing, the stainless steel test panels are cleaned by wiping once with methyl ethyl ketone (MEK), once with n-heptane and again once with MEK, using a soaked fluff-free paper tissue (3M professional Panel Wipe 34567) and left to dry at 20°C for 3 minutes.

### Dip-Coating:

The substrates are dip-coated using a RDC 21-K Dip Coater available from Bungard Elektronik GmbH (dipping speed: 300 mm/min, immersion time: 1 minute), followed by drying at 20°C for 1 minute and oven (Heraeus, Germany) curing at 110°C for 10 minutes. The so-treated samples are used for further testing 24 hours after coating and curing.

### Wipe-Coating:

Six drops of the corresponding coating solution are applied evenly distributed on the substrate, followed by gentle wiping with a paper tissue (KimWipe available from Kimberly-Clark) to homogenously distribute the coating on the surface. The coated substrate are then dried at 20°C for 1 minute and oven (Heraeus, Germany) cured at 100°C for 10 minutes.

### Examples:

### Examples 1 to 5 and comparative examples C1 to C3: Protective coating compositions not comprising any metal salt.

Examples 1 to 5 use protective coating compositions comprising solely amphiphilic copolymers (without optional metal salts). Examples 1 to 3 make use of a solvent mixture comprising deionized water/EtOH (90:10 ratio), whereas examples 4 and 5 make use of a solvent mixture comprising deionized water/DPM (90:10 ratio). Examples C1 to C4 are comparative examples. Examples C1 and C2 make use of a solvent comprising exclusively water. Examples C2 and C4 make use of composition not comprising any amphiphilic copolymer. The coating formulations used in examples 1 to 3 and C1 to C3 are applied on the stainless plate by dip-coating followed by curing at 110°C for 10 minutes, whereas the coating formulations used in examples 4, 5 and C4 are applied by wipe-coating followed by curing at 100°C for 10 minutes. The data presented in Table 1 reflect the oleophobic properties, the mechanical abrasion properties, and the anti-contamination properties of the various coating compositions.

**Table 1:**

| Example | Wt% solid | solvent | Hexadecane contact angle [°] | Hexadecane contact angle [°] after wet mechanical abrasion (50x) | Fingerprint removal (FP) | Stain resistance (SR) |
|---|---|---|---|---|---|---|
| 1 | 0.05 | H₂0/ EtOH | 67 | 27 | 5 | 3 |
| 2 | 0.10 | H₂0/ EtOH | 68 | 43 | 5 | 4 |
| 3 | 0.50 | H₂0/ EtOH | 70 | 62 | 5 | 8 |
| 4 | 1 | H₂0/ DPM | 49 | - | 4 | 8 |
| 5 | 3 | H₂0/ DPM | 65 | - | 5 | 8 |
| C1 | 0.05 | H₂0 | 11 | < 5 | 4 | 1 |
| C2 | *0.50* | H₂0 | 69 | 58 | 3 | 4 |
| C3 | *0* | H₂0/ EtOH | 9 | < 5 | 5 | 1 |
| C4 | *0* | H₂0/ DPM | < 5 | - | 3 | 5 |

As shown in Table 1, protective coating compositions according to the present disclosure combine both excellent oleophobic properties (HCA > 50°) and excellent anti-contamination properties (FP and SR). In contrast, coating compositions not according to the disclosure are deficient in either the oleophobic or the anti-contamination properties.

### Examples 6 and 7 and comparative example C5: Protective coating compositions comprising a metal salt - hydrophobic & oleophobic properties and mechanical abrasion properties.

Examples 6 and 7 use protective coating compositions comprising an amphiphilic copolymer and a metal salt in a solvent mixture comprising deionized water/DPM (90:10 ratio). Example C5 which is a comparative example, makes use of a composition not comprising any metal salt. The coating formulations are applied on the stainless plate by wipe-coating followed by curing at 100°C for 10 minutes. The data presented in Table 2 reflect the hydrophobic and oleophobic properties, as well as the mechanical abrasion properties of the various coating compositions.

**Table 2:**

| Example | Metal salt | Wt% ACT1 | Wt% salt | Coated | | After wet mechanical abrasion (50x) | |
|---|---|---|---|---|---|---|---|
| | | | | WCA [°] | HCA [°] | WCA [°] | HCA [°] |
| 1 | Mg(NO₃)₂ | 0.06 | 0.04 | 80 | 48 | 75 | 32 |
| 5 | Zn(NO₃)₂ | 0.06 | 0.04 | 82 | 49 | 81 | 43 |
| C5 | - | 0.1 | - | 72 | 33 | 60 | 21 |

As shown in Table 2, protective coating compositions comprising a metal salt have improved mechanical abrasion properties, when compared to coating compositions not comprising a metal salt.

### Example 8 and comparative example C6: Protective coating composition comprising a metal salt - anti-contamination properties.

Example 8 use a protective coating composition comprising an amphiphilic copolymer and a metal salt in a solvent mixture comprising deionized water/DPM (90:10 ratio). Example C6 which is a comparative example, makes use of a composition not comprising any metal salt. The coating formulations are applied on the stainless plate by wipe-coating followed by curing at 100°C for 10 minutes. The data presented in Table 3 reflect the anti-contamination properties of the various coating compositions.

**Table 3:**

| Example | Metal salt | Wt% ACT1 | Wt% salt | Fingerprint removal (FP) | Stain resistance (SR) |
|---|---|---|---|---|---|
| 8 | Zn(NO₃)₂ | 0.07 | 0.03 | 4 | 7 |
| C6 | - | 0.1 | - | 3 | 6 |

As shown in Table 3, protective coating compositions comprising a metal salt have improved anti-contamination properties, when compared to coating compositions not comprising a metal salt.

## Claims

1. A protective coating composition for a metal surface, wherein the composition comprises:
a) an amphiphilic copolymer comprising:
i. repeating monomeric units comprising a pendant group comprising a polyfluoropolyether group;
ii. first repeating monomeric units comprising a first pendant group comprising a first polar functional group selected from the group consisting of carboxylate groups, hydroxyl groups, and any combinations or salts thereof;
iii. optionally, second repeating monomeric units comprising a second pendant group comprising a second polar functional group selected from the group consisting of carboxylate groups, hydroxyl groups, and any combinations or salts thereof;
wherein the repeating monomeric units of the amphiphilic copolymer independently comprise an ethylenically unsaturated polymerizable group selected from the group of (meth)acrylate ester containing groups, and wherein the second repeating monomeric units are different from the first repeating monomeric units;
b) a solvent mixture comprising water and an organic solvent; and
c) optionally, a metal salt.

2. A coating composition according to claim 1, wherein the polyfluoropolyether group comprises perfluorinated repeating units comprising at least one of - (CₙF₂ₙO)-, -(CF(Z)O)-, -(CF(Z)CₙF₂ₙO)-, or -(CₙF₂ₙCF(Z)O)-; and wherein Z is a perfluoroalkyl group or a perfluoroalkoxy group, each of which is optionally interrupted by at least one ether linkage, and n is an integer from 1 to 12.

3. A coating composition according to any of claim 1 or 2, wherein the first polar functional group is selected from the group consisting of carboxylate groups, and any salts thereof.

4. A coating composition according to any of the preceding claims, wherein the second polar functional group is selected from the group consisting of hydroxyl groups.

5. A coating composition according to any of the preceding claims, wherein the solvent mixture comprises an organic solvent selected from the group of alcohols, in particular from the group consisting of ethanol, n-propanol, isopropanol, n-butanol, and any combinations or mixtures thereof.

6. A coating composition according to claims 1 to 4, wherein the solvent mixture comprises an organic solvent selected from the group of water-miscible solvents, in particular from the group of water-soluble ethers, more in particular from the group consisting of dipropyleneglycol monomethylether (DPM), 2-butoxy ethanol, diethylene glycol dimethylether (Diglyme), propylene glycol n-butyl ether (PnB), and any combinations or mixtures thereof.

7. A coating composition according to any of the preceding claims, wherein the metal salt comprises a cation of a metal selected from the group consisting of magnesium, zinc, aluminum, calcium, copper, sodium, potassium, lithium, and any combinations thereof.

8. A coating composition according to any of the preceding claims, wherein the metal salt is a nitrate salt, a chloride salt or a sulfate salt of a cation of a metal, in particular a multivalent metal.

9. A coating composition according to any of the preceding claims, which comprises an amphiphilic copolymer in an amount comprised between 0.01 wt% and 10 wt%, between 0.05 wt% and 10 wt%, between 0.1 wt% and 8 wt%, between 0.2 wt% and 6 wt%, between 0.3 wt% and 5 wt%, between 0.5 wt% and 5 wt%, between 0.5 wt% and 4 wt%, or even between 1.0 wt% and 3.0 wt%, based on the weight of the overall coating composition.

10. A coating composition according to any of the preceding claims, which comprises a metal salt in an amount comprised between 0.01 wt% and 10 wt%, between 0.03 wt% and 8 wt%, between 0.05 wt% and 6 wt%, between 0.05 wt% and 5 wt%, between 0.1 wt% and 4 wt%, between 0.1 wt% and 3 wt%, between 0.1 wt% and 2 wt%, or even between 0.1 wt% and 1.5 wt%, based on the weight of the overall coating composition.

11. A coating composition according to any of the preceding claims, which comprises:
a) from 0.01 wt% to 10 wt%, from 0.03 wt% to 8 wt%, from 0.05 wt% to 6 wt%, from 0.05 wt% to 4 wt%, from 0.1 wt% to 3 wt%, from 0.5 wt% to 3 wt%, or even from 1 wt% to 3 wt% of an amphiphilic copolymer;
b) optionally, from 0.01 wt% to 10 wt%, from 0.05 wt% to 5 wt%, from 0.1 wt% to 2 wt%, or even from 0.1 wt% to 1.5 wt% of a metal salt; and
c) from 50 to 99.9 wt%, from 60 and 99 wt%, from 70 and 98 wt%, from 80 and 98 wt%, from 85 and 98 wt%, or even from 90 and 98 wt%, of the solvent mixture,
based on the weight of the overall coating composition.

12. A coating composition according to any of the preceding claims, which has a concentration of active agents comprised between 0.01 wt% and 15 wt%, between 0.05 wt% and 10 wt%, between 0.1 wt% and 8 wt%, between 0.5 wt% and 8 wt%, between 1 wt% and 6 wt%, between 2 wt% and 6 wt%, between 2 wt% and 5 wt%, or even between 3 wt% and 5 wt%, based on the weight of the overall coating composition.

13. A method of reducing contamination from a metal surface, which comprises the steps of:
a) providing a metal surface;
b) applying a protective coating composition according to any of claims 1 to 12 to the metal surface thereby forming a layer of the protective coating composition adjacent to the metal surface; and
c) drying and/or curing the layer of the protective coating composition thereby forming a protective coating layer adjacent to the metal surface.

14. A coated article comprising a substrate having a metal surface and a coating layer adjacent to at least part of the metal surface, wherein the coating layer comprises a layer of the protective coating composition according to any of claims 1 to 12 which has been dried and/or cured onto the metal surface.

15. Use of a protective coating composition according to any of claims 1 to 12 for protecting a metal surface which is typically selected from the group consisting of stainless steel, chromium, and any combinations or mixtures thereof.
